# EUROPEAN PATENT APPLICATION

(11) **EP 1 711 011 A1**
(43) Date of publication of application: **11.10.2006**
(21) Application number: 05704138.6
(22) Date of filing: 20.01.2005
(51) Int. Cl.: H04N 5/92, H04N 5/85, G11B 20/10, G11B 20/12, G11B 27/00

(54) **DATA RECORDING METHOD, DATA REPRODUCTION DEVICE, AND RECORDING MEDIUM**

(30) Priority: 20.01.2004 JP 2004012375; 02.09.2004 JP 2004255136
(71) Applicant: NEC Corporation, Minato-ku Tokyo 108-8001 (JP); NEC Electronics Corporation, Kawasaki-shi, Kanagawa 211-8668 (JP); KABUSHIKI KAISHA TOSHIBA, Tokyo 105-8001 (JP)
(72) Inventor: ITOI, Satoshi, c/o NEC Corporation, Tokyo 108-8001 (JP); SAKAI, Noriaki, c/o NEC Electronics Corporation, Kawasaki-shi, Kanagawa 211-8668 (JP); NAKASHIKA, Masahiro, c/o Intellectual Prop. Div., Tokyo 105-8001 (JP); TSUMAGARI, Yasufumi, c/o Intellectual Prop. Div., Tokyo 105-8001 (JP); KIKUCHI, Shinichi, c/o Intellectual Prop. Div., Tokyo 105-8001 (JP)
(74) Representative: Vossius & Partner
(86) International application number: PCT/JP2005/001028
(87) International publication number: WO 2005/074273

(57) **Abstract**

A first file 401 includes management data 404. The data 404 describes management information units related to a plurality of transport streams 406 and 407 constituting a second file 403. A third file 402 includes only time map data 405 indicating the relationship between time and recording position of the transport stream 406 and does not include time map data related to the other transport stream 407. In this arrangement, multistream data, multichannel data, or full TS data is recorded as the transport stream 407. Accordingly, multistream recording or multichannel recording, and full TS recording can be easily realized in a video recorder for, e.g. a DVD.

## Description

### Technical Field

The present invention relates to a method and apparatus for recording and playing at least one of video, audio, and data in a recording apparatus, such as a hard disk/DVD combo video recorder, a DVD video recorder, a DVD stream recorder, or a hard disk video recorder, and a recording medium.

### Background Art

The DVD-Forum standardizes application formats associated with DVD (Digital Versatile Disc) video and streams. The application formats include DVD-Video for playback only, DVD-VR (Video Recording) in which recording, playback, and editing are easily performed, and DVD-SR (Stream Recording) in which a broadcast or transmission stream can be directly recorded and played with ease.

DVD-Video is a format used only for playback of a disc which contains content, such as a movie, and is mainly targeted to home theaters. DVD-VR is a format principally designed to digitize analog video, encode the digital video into MPEG-2 data, and record the resultant data. DVD-VR is mainly targeted to analog broadcast recording and video cameras. DVD-SR is a format to basically directly record data transmitted as an MPEG stream and is mainly targeted to direct recording for digital broadcasting. DVD-Video is now commercialized and distributed into widespread use around the world. DVD-VR is also being diffused widely. DVD-SR has not been yet commercialized.

In analog broadcast recording in the DVD-VR format, generally, only one channel is recorded. In other words, only one channel (e.g., NTV (Channel 4)) is recorded, alternatively, another channel (e.g., TBS (Channel 6)) alone is recorded. DVD-Video, the playback-only format, can also be applied to recording. In analog broadcast recording in the DVD-Video format, generally, only one channel is recorded.

Japanese Unexamined Patent Application Publication No. 2001-67802 discloses a multichannel recording apparatus and method for simultaneously recording a plurality of programs on a disc-shaped recording medium with efficiency.

### Disclosure of Invention

In a case where digital broadcast data is directly recorded in the DVD-SR format toward a request for simultaneous recording of video, audio, and data over multiple channels on a DVD, since one broadcast wave includes a plurality of streams in digital broadcasting, digital broadcast data sets of streams can simultaneously be recorded in this format.

However, simultaneous recording of multiple channels by the foregoing method has the following problems:

In recording analog broadcast data in the DVD-VR or DVD-Video format, video audio of two or more channels can simultaneously be recorded. In simultaneous recording of different channels (e.g., NTV and TBS), an NTV-encoded stream segment is recorded in an area A for one second, a TBS-encoded stream segment is then recorded in an area B for one second, and such a process is repeated. In this recording method, the seeking operation frequently occurs. In some cases, partial deterioration in error rate of a medium causes a recording error. Unlike with a playback error, the recording error makes the retry operation more difficult. Forcibly trying to again record data leads to delay accumulation. This may result in recording failure. As the number of recorded channels increases to three, four, and so forth, realization of multichannel recording becomes more difficult.

In addition, it is necessary to consider the possibility that programs having the correlation therebetween over a plurality of channels are broadcast. For example, the following programs are possible: In broadcasting one soccer game, one channel (e.g., NTV) broadcasts the game viewed from front seats and another channel (e.g., TBS) broadcasts the game viewed from the rear of a goal net. In a case where those channels are simultaneously recorded, it is necessary to synchronize both of the channels (NTV and TBS) and switch therebetween at high speed during playback. However, the high-speed synchronization and switching are very difficult.

Although digital broadcast data can be directly recorded as a multistream in the DVD-SR format, the contents of the recorded stream are unknown after recording. Disadvantageously, a user cannot know that the recorded stream is a multistream, recording positions and recording time points of video audio data sets of respective channels in the multistream, and the correlation therebetween until the user reads out the stream and analyzes it.

Patent Document 1 discloses a method for recording a plurality of channel programs, by carrying out a control operation that alternately records digital data sets composed of two different programs, in each unit of a predetermined data length. However, the method disclosed in Patent Document 1 has a disadvantage that processing during recording is complicated.

It is an object of the present invention to provide a data recording method capable of simultaneously recording a plurality of channels with ease.

The present invention has found out problems in simultaneous recording of multiple channels and solved them. In other words, according to the present invention, even when it is difficult to simultaneously generate a plurality of time maps, each showing the relationship between time and recording position of the corresponding stream, during recording of a plurality of channels, a stream which does not contain a time map is intentionally generated, so that the channels can simultaneously be recorded.

Specifically, according to an embodiment of the present invention, there is provided a recording method including: recording management data in a first file; and recording a time-map-free stream, which does not contain a time map showing the relationship between time and recording position, in a second file.

There is provided another method including: recording management data in a first file; recording n (n≥2) kinds of streams in a second file, the streams being distinguished from each other by a predetermined process; and arranging flags in the first file, the flags being used for distinction of the n kinds of streams recorded in the second file.

There is provided another method including: recording management data in a first file; recording n kinds of streams in other files such that first, second, third, ..., and nth streams are recorded in second, third, ..., and (n+1)th files, respectively, the streams being distinguished from each other by a predetermined process; and arranging flags in the first file, the flags being used for distinction of the n kinds of streams.

There is provided another method including: recording management data in a first file; recording n kinds of streams in second to (m+1)th (m≥2) files, respectively, the streams being distinguished from each other by a predetermined process; and arranging flags in the first file, the flags being used for distinction of the n kinds of streams.

Preferably, time-map-containing streams (namely, streams with time maps) are set to first to kth (k≥1, k≥n-1) streams, time-map-free streams (streams without any time maps) are set to (k+1)th to nth streams, and time maps related to the first to kth streams are recorded in the first file or a third file.

When n=2 and k=1, a time-map-containing stream may be set to a first stream and a time-map-free stream may be set to a second stream.

Preferably, time-map-containing streams are set to first to kth streams, time-map-free streams are set to (k+1)th to nth streams, and time maps related to the first to kth streams are recorded in the first file or an (n+2)th file.

Preferably, time-map-containing streams are set to first to kth streams, time-map-free streams are set to (k+1)th to nth streams, and time maps related to the first to kth streams are recorded in the first file or an (m+2)th file.

Preferably, a 1-PMT partial TS (Transport Stream) having one PMT (Program Map Table) is set to a first stream and another stream is set to a second stream.

Preferably, a first stream is at least a 1-PMT partial TS and a time-map-free 1-PMT partial TS is set to a second stream.

One multi-PMT stream including a plurality of 1-PMT streams may be set to a second stream.

Preferably, a plurality of streams or a plurality of 1-PMT streams are combined into one 1-PMT stream and the stream is set to the first stream.

The plurality of streams or the plurality of 1-PMT streams may be partial TSs of different channels.

The plurality of streams or the plurality of 1-PMT streams may be full TSs.

Preferably, a stream whose time information is described is set to a first stream and a stream whose time information is not described is set to a second stream.

The time information may be PTS (Presentation Time Stamp).

The stream formats of first and second streams may be known.

Details on a video, audio, or data format of each of the first and second streams may be known.

A stream whose stream format is unknown may be recorded in another file.

A stream whose details on a video, audio, or data format are unknown may be recorded in another file.

A stream transmitted by storage broadcasting may be set to a second stream.

There is provided another recording method, wherein management data includes a part or all of stream-format identification information, a flag indicating whether the corresponding stream is a 1-PMT partial TS or another TS, the number of PMTs, the number of multiplexed channels in the other TS, and TS-format configuration information, and also includes every channel a part or all of broadcasting-station information, a moving-picture data compression standard, an audio data compression standard, a still-picture data compression standard, an animation data compression standard, a flag indicating the presence or absence of a time map, a flag indicating the presence or absence of time information, and a flag indicating whether the corresponding stream is a standard broadcast stream or a storage broadcast stream.

Preferably, MPEG video, H.264 video, or Windows (registered trademark) Media video is shown as the moving-picture data compression standard, MPEG audio, Dolby audio, or DTS audio is shown as the audio data compression standard, and JPEG or PNG is shown as the still-picture data compression standard.

According to another embodiment of the present invention, there is provided a data recording apparatus for recording data by any one of the above-described methods and/or a data playback apparatus for playing data recorded by any one of the methods.

According to another embodiment of the present invention, there is provided a recording medium in which data is recorded by any one of the above-described methods.

An example of the specific structure of stream data will now be described. One or more ESOBs (Extended Stream Objects) are recorded every program in a file for broadcast stream recording. Each ESOB includes one or more ESOBUs (Extended Stream Object Units: the length of a unit corresponding to 0.4 to 1 s). Each ESOBU includes one or more Packet Groups (each group including the predetermined number of TS packets). Each Packet Group includes a Packet Group Header and data following the Header. The data includes the predetermined number of (170) pairs, each pair comprising a TS packet and a PATS (Packet Arrival Time Stamp) indicating the arrival time of the TS packet.

The above-described time map is data having a predetermined format. For example, the time map may be defined as data specified in the DVD-VR format.

In this definition, a stream which does not have a format in the above-described embodiment of the present invention may be defined as a stream that does not include data specified in the DVD-VR. Specifically, a time map specified in the above-described DVD-VR format includes data described in VR4-35 of "DVD Specifications for Rewritable/Re-recordable Discs Part 3 VIDEO RECORDING Version 1.0" issued by the DVD-Forum. In other words, the time map has to include at least the following data or all of data equivalent to the following data:
1. 1STREF_SZ: a first reference picture in a VOBU (Video Object) or an ESOBU when a GOP (Group of Pictures) whose number is an integer of one or more is set to a VOBU or ESOBU, i.e., data indicating the number of packet groups or the number of sectors as the size of I-picture;
2. VOBU_PB_TM(SOBU_PB_TM): data indicating the number of video fields as the duration during which the VOBU (ESOBU) is played; and
3. VOBU_SZ(SOBU_SZ): data indicating the number of packet groups or the number of sectors as the size of the VOBU (ESOBU) recorded.

As is obvious from the above description, "stream containing none of the above-described data" may be called "time-map-free stream", which does not contain a time map. In other words, according to the present invention, time-map-free streams include a stream which does not a time map specified in the DVD-Forum in addition to the time-map-free stream which actually has no time map. In other words, time-map-free streams, each of which does not contain a time map specified in the DVD-Forum, include a table-containing stream which contains a table showing the relationship between arrival time and recording address of the broadcast stream and/or a table showing the relationship between time and recording address.

In another example, when a time map is defined as a table showing the relationship between playback presentation time and recording address, a stream which does not have the above-defined table is not equivalent to a time-map-containing stream according to the present invention. In other words, such a stream is a time-map-free stream. In the present invention, therefore, "table showing the relationship between arrival time and recording address" is not called "time map".

According to another embodiment of the present invention, there is provided a method for recording data, including: recording management data in a first file (management information file); and recording one or more unrestricted streams (ESOBs), each of which does not necessarily contain a time map, in second and subsequent files (Stream Object files), respectively.

According to another embodiment of the present invention, there is provided a method for recording data, including: recording management data in a first file; setting one or more time-map-containing streams, each of which certainly contains a time map, to first to kth (k≥1, k≥n-1) streams and recording the streams in second and subsequent files, respectively; and setting one or more unrestricted streams to (k+1)th to nth streams and recording the streams in another or other files, respectively.

According to the method of the present invention, preferably, each unrestricted stream is regarded as any one type of a time-map-containing stream, a table-containing stream which has a table showing the relationship between arrival time (PATS) and recording address of the broadcast stream, and a table-free stream which does not have a table showing the relationship between time (presentation time) and recording address, and a flag indicating the type is recorded separately.

In this case, each unrestricted stream is divided into predetermined stream segments and each segment is regarded as any one type of a time-map-containing stream segment, a table-containing stream segment, and a time-map-free table-free stream segment, the table-containing stream segment containing a table showing the relationship between arrival time and recording address of the broadcast stream, the time-map-free table-free stream segment containing none of the time map and the table showing the relationship between arrival time and recording address of the broadcast stream. A flag indicating the type may be recorded separately.

Each flag may be recorded in the first file.

Each unrestricted stream may be regarded as any one type of a table-containing stream, which contains a table showing the relationship between arrival time and recording address of the broadcast stream, and a table-free stream, which does not contain a table showing the relationship between time and recording address. A flag indicating the type may be recorded separately.

Each unrestricted stream may be divided into predetermined stream segments and each segment may be regarded as any one type of a table-containing stream segment and a time-map-free table-free stream segment. A flag indicating the type may be recorded separately.

Each flag may be recorded in the first file.

A time map or a table related to each unrestricted stream may be recorded in another file.

According to another embodiment of the present invention, there is provided a data recording apparatus for recording data by the above-described method and/or a data playback apparatus for playing data recorded by the above-described method.

According to another embodiment of the present invention, there is provided a recording medium in which data is recorded by the above-described method.

### Brief Description of the Drawings

Fig. 1 is a block diagram of the functional structure of a recording system according to the present invention.
Fig. 2 is a block diagram of the functional structure of a playback system according to the present invention.
Fig. 3 is a diagram showing an example of the arrangement of files used in the present invention.
Fig. 4 is a diagram showing an example of another arrangement of files used in the present invention.
Fig. 5 is a diagram showing an example of another arrangement of files used in the present invention.
Fig. 6 is a diagram showing an example of another arrangement of files used in the present invention.
Fig. 7 is a diagram showing an example of another arrangement of files used in the present invention.
Fig. 8 is a block diagram explaining a process of generating a multi-PMT multiplexed stream according to the present invention.
Fig. 9 is a block diagram explaining a process of generating a 1-PMT multiplexed stream according to the present invention.
Fig. 10 is a block diagram showing a process of generating a multiplexed stream including full TSs according to the present invention.
Fig. 11A is a diagram showing a part of a DVD_HDVR file.
Fig. 11 B is a diagram showing another part of the DVD_HDVR file.
Fig. 12 is a diagram showing an embodiment in which management data is recorded in a first file and unrestricted streams are recorded in second and subsequent files.
Fig. 13 is a diagram showing another embodiment in which management data is recorded in a first file, time-map-containing streams are recorded in second and subsequent files, and unrestricted streams are recorded in other files.

### Best Mode for Carrying Out the Invention

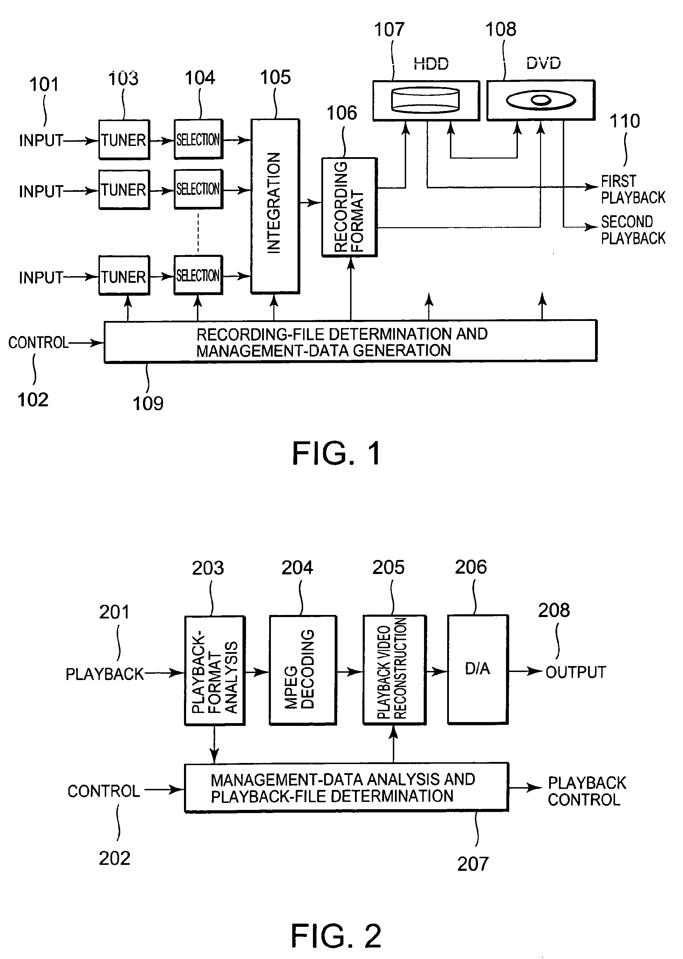

A data recording method according to embodiments of the present invention will now be described with reference to Figs. 1 to 13.

Figs. 1 and 2 show a data recording and playback apparatus for realization of multichannel video audio recording according to the present invention. Function blocks illustrated in the diagrams may be realized by software or hardware.

Fig. 1 shows an example of recording of multichannel video audio data on an HDD or DVD video recorder.

Video audio data is supplied as input signals 101 to the apparatus shown in the diagram. This example shows input of a plurality of channels.

A control signal 102 is also supplied. The control signal 102 is user operation data to specify channel numbers to be multiplexed and a multiplexing method.

In response to the input signal 101, each tuner 103 outputs a multichannel partial TS. Selection blocks 104 select necessary channels. Alternatively, each tuner 103 may output a full TS. The selection blocks 104 may select the output full TSs.

The respective partial or full TSs, i.e., transport streams selected by the selection blocks 104 are supplied to an integration block 105. The integration block 105 multiplexes the partial TSs of the specified channels using a plurality of PMTs. Alternatively, the integration block 105 multiplexes the partial TSs of the specified channels using one PMT. The specification is performed under the control of the a block 109.

A recording format block 106 formats the resultant data multiplexed through the integration block 105 for use on an HDD 107 or a DVD 108. The formatting is performed in accordance with the physical format, file format, and video application format of the HDD 107 or the DVD 108.

The resultant video audio data formatted by the recording format block 106 is recorded as a file, specified by the block 109, on the HDD 107 or the DVD 108.

Simultaneously, the control input 102 is supplied to the recording-file determination and management-data generation block 109, so that a recording format and a recording file are specified in the recording format block 106, management data suitable for channels to be multiplexed, a multiplexing method, and data is generated, and the generated management data is recorded as a dedicated management data file or a time map data file on the HDD 107 or the DVD 108. The configuration of a recording file will be described in detail below.

Dubbing of data recorded on the HDD 107 and the DVD 108 is possible therebetween. The data is output as a playback output 110. Playback may be performed as follows: As shown in the diagram, the HDD 107 outputs a first playback output and the DVD 108 outputs a second playback output. Alternatively, data may be supplied to a selector (not shown) for selecting the first playback output or the second playback output and the selector may output the selected output as a playback output of one system.

Fig. 2 is a block diagram of the structure of a system for outputting and displaying multichannel-recorded/played data. Referring to Fig. 2, a playback signal 201 is supplied to the system. The supplied playback signal corresponds to the output 110 shown in Fig. 1.

Simultaneously, a control signal 202 is supplied to the system. The control signal 202 is user operation data to specify a method for displaying playback multiplexed data.

The playback signal 201 is supplied to a playback-format analysis block 203. The playback-format analysis block 203 analyzes multiplexed channels of video audio data, a multiplexing method, and data.

MPEG-compressed data in an output of the playback-format analysis block 203 is decoded by an MPEG decoding block 204. A compression standard other than MPEG is available. A stream compressed by a standard other than MPEG is decoded by the corresponding standard.

A playback video reconstruction block 205 reconstructs an output of the MPEG decoding block 204. A channel to be selected from multichannel video audio data recorded and be displayed and a display position are specified, thus reconstructing playback video data.

A D/A 206 converts an output of the playback video reconstruction block 205 into analog video and audio signals. The D/A 206 may include a noise reducer and a filter.

A management-data analysis and playback-file determination block 207 analyzes management data in playback data on the basis of the control input 202, determines a file to be played, controls the playback of the file, determines a method for reconstructing playback video, and controls the playback video reconstruction block 205.

An output of the D/A 206 is output as video and audio output signals 208.

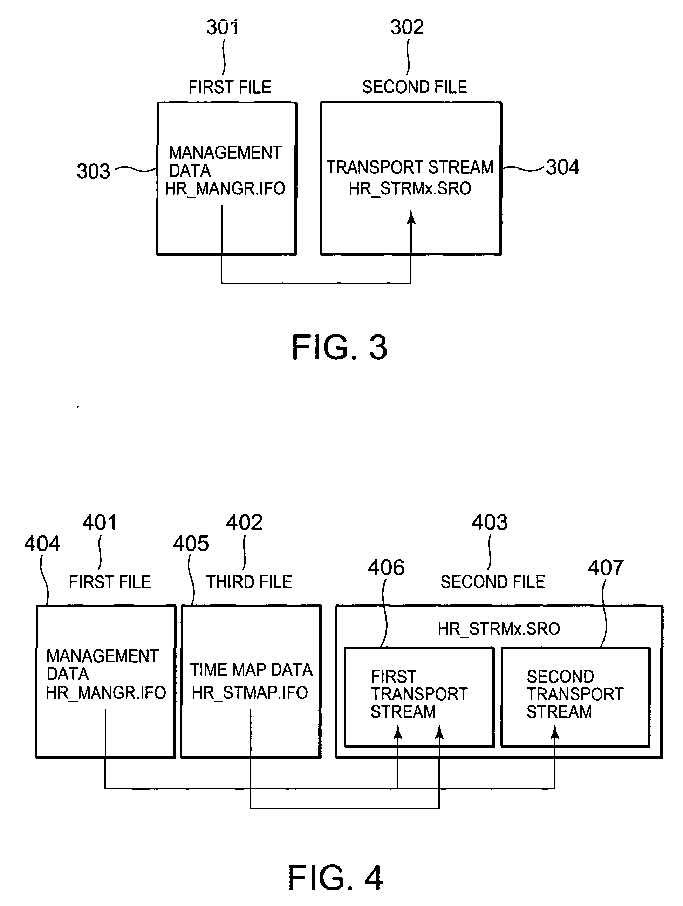

Fig. 3 shows an example in which management data is recorded in a first file, information about details on at least one of video, audio, and data formats is recorded in the first file, and a stream, whose relationship between time and recording position is not recorded, is recorded in a second file.

Reference numeral 301 denotes the first file and reference numeral 302 denotes the second file.

The first file 301 contains management data 303. In the management data 303, information regarding a transport stream 304 constituting the second file 302 is recorded. The management data 303 will be described in detail below.

The second file 302 contains the transport stream 304 transmitted by digital broadcasting from a broadcasting station. As for the transport stream 304, the present apparatus, serving as the recording apparatus, can record the name of the broadcasting station, a video encoding format, and an audio encoding format but does not record a time map showing the relationship between time and recording position. Therefore, no time maps exist in the first and second files 301 and 302. According to the present invention, a time-map-free stream which does not contain a time map is recorded in an area different from that for management data. Consequently, it is unnecessary to calculate time maps related to a plurality of streams. Advantageously, a plurality of streams can simultaneously be recorded.

Fig. 4 shows an example in which management data is recorded in a first file, two kinds of streams distinguished from each other by a predetermined process are recorded in a second file, flags for distinction of the two kinds of streams are arranged in the first file, and a time map is recorded in a third file (this example corresponds to a case where n=2 and k=1 in Claims 2 and 5, or a case in Claim 6).

Reference numeral 401 denotes the first file, reference numeral 402 denotes the third file, and reference numeral 403 denotes the second file.

The first file 401 contains management data 404. Information regarding transport streams 406 and 407 constituting the second file 403 is recorded in the management data 404. The management data 404 will be described in detail below.

The third file 402 contains time map data 405. The time map data 405 is a map showing the relationship between time and recording position in the transport stream 406. In Fig. 4, the management data 404 is contained in the first file 401 and the time map data 405 is included in the third file 402. Both of the management data 404 and the time map data 405 may be contained in the first file 401. In this case, the third file 402 may be omitted.

The second file 403 contains the transport streams 406 and 407 transmitted by digital broadcasting from a broadcasting station. As for the transport stream 406, the present apparatus, serving as the recording apparatus, can record the name of the broadcasting station, a video encoding format, an audio encoding format, and a time map showing the relationship between time and recording position. In other words, in the example shown in the diagram, the time map is recorded as the management data 404 in the first file 401 or is recorded as the time map data 405 in the third file 402 that is time-map-specific. As described above, a time map may be recorded as the management data 404 or the time map data 405.

As for the transport stream 407, the present apparatus, serving as the recording apparatus, can record the name of the broadcasting station, a video encoding format, and an audio encoding format but does not record a time map showing the relationship between time and recording position. Therefore, the first file 401, the third file 402, and the other file do not include a time map related to the transport stream 407.

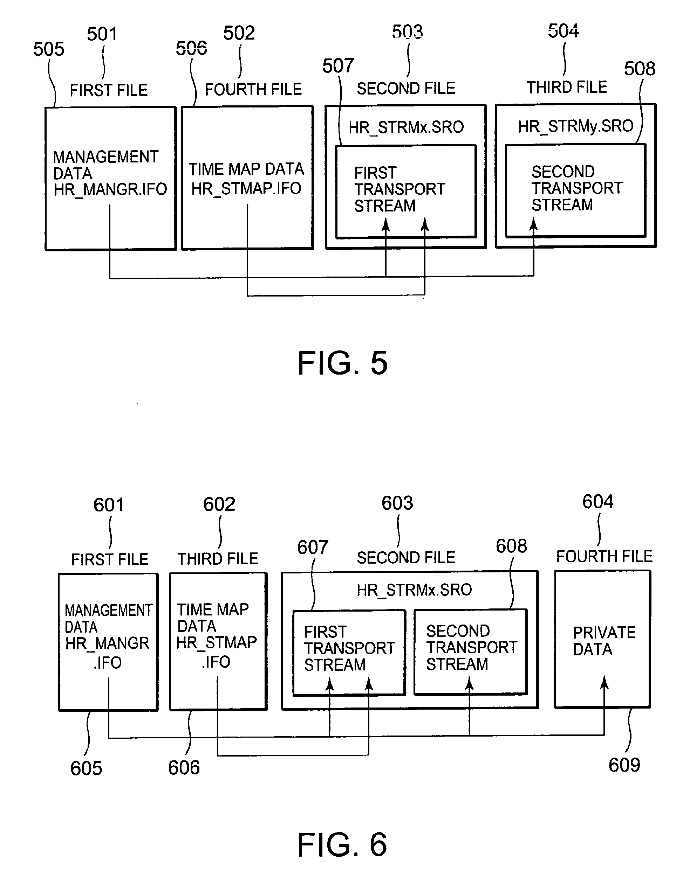

Fig. 5 shows an example in which management data is recorded in a first file, two kinds of streams distinguished from each other by a predetermined process are recorded in second and third files, respectively, flags for distinction of the two kinds of streams are arranged in the first file, and a time map is recorded in a fourth file (this example corresponds to a case where n=2 and k=1 in Claims 3 and 7).

Reference numeral 501 denotes the first file, reference numeral 502 denotes the fourth file, reference numeral 503 denotes the second file, and reference numeral 504 denotes the third file.

The first file 501 contains management data 505. Information regarding transport streams 507 and 508, constituting the second and third files 503 and 504, respectively, is recorded in the management data 505. The management data 505 will be described in detail below.

The fourth file 502 contains time map data 506. The time map data 506 is a map showing the relationship between time and recording position of the transport stream 507. In Fig. 5, the management data 505 is contained in the first file 501 and the time map data 506 is included in the fourth file 502. Both of the management data 505 and the time map data 506 may be contained in the first file 501. In this case, the fourth file 502 may be omitted.

The second and third files 503 and 504 contain the transport streams 507 and 508 transmitted by digital broadcasting from a broadcasting station, respectively. As for the transport stream 507, the present apparatus, serving as the recording apparatus, can record the name of the broadcasting station, a video encoding format, an audio encoding format, and a time map showing the relationship between time and recording position. In other words, the time map is recorded as the management data 505 in the first file 501 or is recorded as the time map data 506 in the fourth file 502 that is time-map-specific.

As for the transport stream 508, the present apparatus, serving as the recording apparatus, can record the name of the broadcasting station, a video encoding format, and an audio encoding format but does not record a time map showing the relationship between time and recording position. Therefore, the first file 501, the fourth file 502, and the other files do not include a time map related to the transport stream 508.

In another case, management data is recorded in a first file, n kinds (n≥2) of streams distinguished from each other by a predetermined process are recorded in second to (m+1)th (m≥2) files, respectively, flags for distinction of the n kinds of streams are arranged in the first file, and a time map is recorded in a fourth file. A figure showing this case is omitted.

In this case, for example, when two kinds of streams are recorded in the second file and other two kinds of streams are recorded in a third file, first and second transport streams may be recorded in the second file 503 and third and fourth transport streams may be recorded in the third file 504 in Fig. 5 (this corresponds to a case where n=4 and m=2 in Claims 4 and 8).

In this instance, when k=2, time maps related to two kinds of streams are created, respectively. Accordingly, e.g., time maps may be created with respect to the first and second streams included in the second file 503, respectively. Time maps may not be created with respect to the third and fourth streams included in the third file 504.

When k=1, a time map is created with respect to one kind of stream. For example, a time map may be created with respect to the first stream contained in the second file 503. Time maps with respect to the second stream in the second file 503 and the third and fourth streams in the third file 504 may not be created.

As described above, the number of files can be determined in accordance with the number of kinds of streams in consideration of file controllability and file editability.

Fig. 6 shows an example where a stream whose details on formats are unknown is recorded in a fourth file in Fig. 4.

Reference numerals 601, 602, 603, and 604 denote first, third, second, and fourth files, respectively.

The first file 601 contains management data 605. Information regarding transport streams 607 and 608 constituting the second file 603 and a stream 609 constituting the fourth file 604 is recorded in the management data 605. Since details on formats of the transport stream 609 are unknown, information may not be recorded completely. No information may be recorded. The management data 605 will be explained in detail below.

The third file 602 contains time map data 606. The time map data 606 is a map showing the relationship between time and recording position of the transport stream 607. In Fig. 6, the management data 605 is included in the first file 601 and the time map data 606 is included in the third file 602. Both of the management data 605 and the time map data 606 may be contained in the first file 601. In this case, the third file 602 may be omitted.

The second file 603 contains the transport streams 607 and 608 transmitted by digital broadcasting from a broadcasting station. As for the transport stream 607, the present apparatus, serving as the recording apparatus, can record the name of the broadcasting station, a video encoding format, an audio encoding format, and a time map showing the relationship between time and recording position. In other words, the time map is recorded as the management data 605 in the first file 601 or the time map data 606 in the third file 602 for time map only. The time map may be included in the management data 605 or the time map data 606.

As for the transport stream 608, the present apparatus, serving as the recording apparatus, can record the name of the broadcasting station, a video encoding format, and an audio encoding format but does not record a time map showing the relationship between time and recording position. Therefore, none of the first file 601, the third file 602, and the other files include a time map related to the transport stream 608.

The fourth file 604 includes private data 609 whose details on formats are unknown. The private data includes, e.g., broadcast data whose source, serving as a broadcasting station, is unknown and non-broadcast data. As for the management data 605, only known data in the private data 609 may be recorded. Alternatively, no data may be recorded. None of the first file 601, the third file 602, and the second file 603 include a time map related to the data 609.

As described above, according to this embodiment, private data, such as broadcast data whose broadcasting station is unknown and non-broadcast data, can simultaneously be recorded.

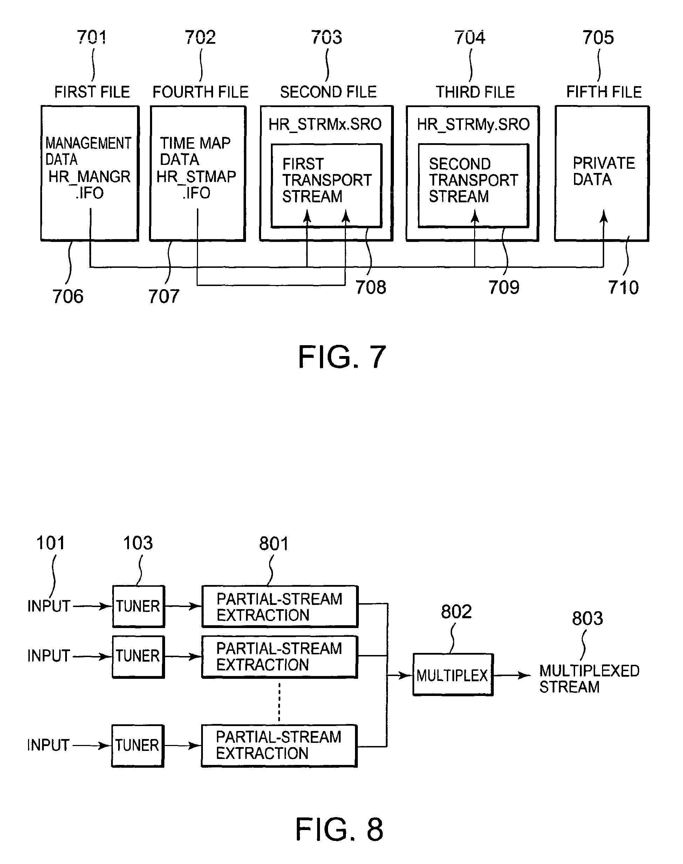

Fig. 7 shows an example where a stream whose details on formats are unknown is recorded in a fifth file in Fig. 6.

Reference numerals 701, 702, 703, 704, and 705 denote first, fourth, second, third, and fifth files, respectively.

The first file 701 contains management data 706. Information regarding transport streams 708 and 709 constituting the second files 703 and 704, respectively, and private data 710 constituting the fifth file 705 is recorded in the management data 606. Since details on formats of the private data 710 are unknown, information may not be recorded completely. No information may be recorded. The management data 706 will be explained in detail below.

The fourth file 702 contains time map data 707. The time map data 707 is a map showing the relationship between time and recording position of the transport stream 708. In Fig. 7, the management data 706 is contained in the first file 701 and the time map data 707 is included in the fourth file 702. Both of the management data 706 and the time map data 707 may be contained in the first file 701. In this case, the fourth file 702 may be omitted.

The second and third files 703 and 704 contain the transport streams 708 and 709 transmitted by digital broadcasting from a broadcasting station. As for the transport stream 708, the present apparatus, serving as the recording apparatus, can record the name of the broadcasting station, a video encoding format, an audio encoding format, and a time map showing the relationship between time and recording position. In other words, the time map is recorded as the management data 706 in the first file 701 or the time map data 707 in the fourth file 702 for time map only. The time map may be recorded as the management data 706 or the time map data 707.

As for the transport stream 709, the present apparatus, serving as the recording apparatus, can record the name of the broadcasting station, a video encoding format, and an audio encoding format but does not record a time map showing the relationship between time and recording position. Therefore, none of the first file 701, the fourth file 702, and the other files include a time map related to the transport stream 709.

The fifth file 705 includes the private data 710 whose details on formats are unknown. This data includes, e.g., broadcast data whose source, a broadcasting station, is unknown and non-broadcast data. As for the management data 706, only known information in the private data 710 may be recorded. Alternatively, no information may be recorded. None of the first file 701, the fourth file 702, the second file 703, and the third file 704 include a time map related to the private data 710.

According to this embodiment shown in Fig. 7, the same advantages as those in Fig. 6 can be obtained.

In the following description, each of the first transport streams 406, 507, 607, and 708 in Figs. 4, 5, 6, and 7, respectively, will be explained as an example of a time-map-containing stream, which contains a time map. Each of the second transport streams 304, 407, 508, 608, and 709 in Figs. 3, 4, 5, 6, and 7, respectively, will be explained as an example of a time-map-free stream, which does not contain a time map.

Each of the first transport streams 406, 507, 607, and 708 in Fig. 4, 5, 6, and 7 may be recorded as a 1-PMT partial TS (Transport Stream), which has one PMT (Program Map Table). Each of the second transport streams 304, 407, 508, 608, and 709 in Fig. 3, 4, 5, 6, and 7 may be recorded as another stream.

In this instance, PMT is called a program map table and corresponds to a table showing the positions of video data, audio data, data, broadcast data, and caption data contained in one service broadcast stream. Generally, one service stream has one PMT. In the future, a new broadcast program having a plurality of PMTs may be possible.

The first stream should be a 1-PMT partial TS. The second stream may not be a 1-PMT partial TS. When the second stream is a 1-PMT partial TS, the stream contains no time map.

As for the 1-PMT time-map-free partial TS recorded as the second stream, a time map may be calculated later and the stream may be redefined as a first stream serving as a time-map-containing stream. In this case, the stream itself may not be re-recorded. Only management data may be rewritten.

As described above, according to this embodiment, when management data is recorded in a first file, a 1-PMT partial TS is a first stream, and another TS is a second stream, the first and second streams are recorded in a second file and flags for distinction of the two kinds of streams recorded in the second file are arranged in the first file. The first stream is a time-map-containing stream and the second stream is a time-map-free stream. A time map related to the first stream is recorded in the first or a third file. In this case, the management data shows a part or all of stream-format identification information, a flag indicating that the corresponding stream is a 1-PMT partial TS or another TS, the number of PMTs, the number of multiplexed channels in the other TS, and TS-format configuration information, and also shows every channel a part or all of broadcasting-station information, a moving-picture data compression standard, an audio data compression standard, a still-picture data compression standard, an animation data compression standard, a flag indicating the presence or absence of a time map, a flag indicating the presence or absence of time information, and a flag indicating whether the corresponding stream is a standard broadcast stream or a storage broadcast stream. Therefore, the recording operation can be easily realized such that a 1-PMT partial TS is recorded as a first stream with a time map and a multichannel partial TS or a full TS is recorded as a second stream without a time map.

Fig. 8 shows an example in which one multi-PMT stream assembly including a plurality of 1-PMT streams, each of which has a PMT, is recorded in one file.

Referring to Fig. 8, a plurality of inputs 101 are supplied to the tuners 103 to obtain a plurality of 1-PMT streams. A plurality of partial-stream extraction blocks 801 extract. e.g., three 1-PMT streams from the 1-PMT partial streams. A multiplex block 802 multiplexes the extracted streams to generate a multiplexed stream 803. In the multiplexed stream 803, data sets of three different channels are multiplexed. In other words, it is assumed that streams having different PMTs transmitted by a plurality of broadcasting stations (e.g., NTV, TBS, and Fuji Television) are multiplexed into one multiplexed stream 803 having three PMTs.

The multiplexed stream 803 in which a plurality of channels are multiplexed may be recorded as a second transport stream designated by reference numeral 304, 407, 508, 608, or 709 in Fig. 3, 4, 5, 6, or 7.

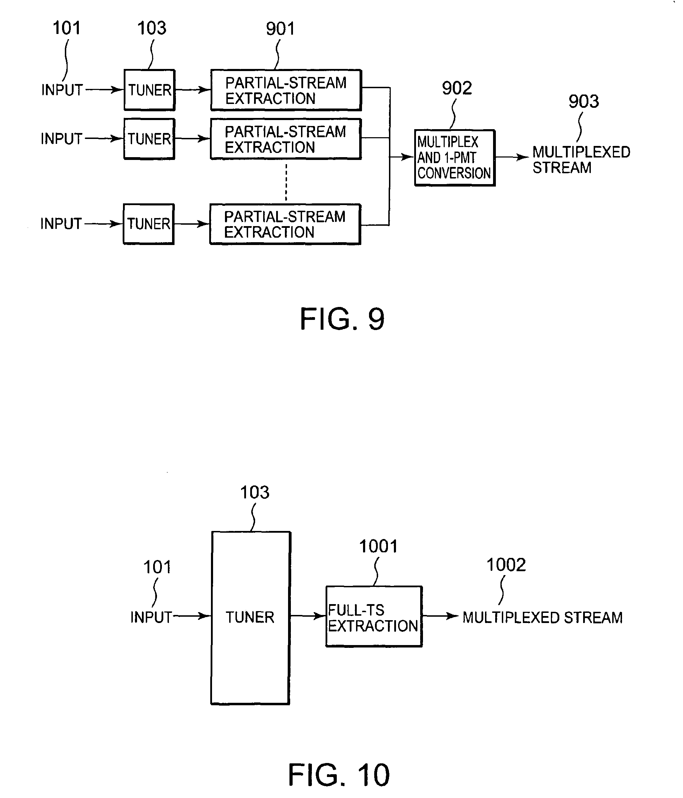

Fig. 9 shows another example in which one stream assembly including a plurality of streams, or a plurality of streams with a plurality of PMTs (program map tables) is recorded in one file.

Referring to Fig. 9, a plurality of inputs 101 are supplied to the tuners 103 to obtain a plurality of 1-PMT streams. A plurality of partial-stream extraction blocks 901 extract, e.g., three 1-PMT streams from the 1-PMT partial streams. A multiplex and 1-PMT conversion block 902 multiplexes and converts the extracted streams so that the resultant multiplexed stream has one PMT, thus generating a multiplexed stream 903. In the multiplexed stream 903, data sets of three different channels are multiplexed into a 1-PMT stream. In other words, it is assumed that streams having different PMTs transmitted by a plurality of broadcasting stations (e.g., Nippon Television, TBS, and Fuji Television) are multiplexed into one multiplexed stream 903 having one PMT.

The multiplexed stream 903 in which a plurality of channels are multiplexed may be recorded as a first transport stream designated by reference numeral 406, 507, 607, or 708 in Fig. 4, 5, 6, or 7.

The streams shown in Figs. 8 and 9 may be multichannel partial TSs.

Alternatively, the streams shown in Figs. 8 and 9 may be full TSs.

Fig. 10 shows a full TS.

Referring to Fig. 10, an input 101 is supplied to the tuner 103 to obtain a stream. A full-TS extraction block 1001 extracts a full TS to generate a multiplexed stream 1002.

In this instance, a full TS will now be explained. For example, in BS digital broadcasting, one transponder, serving as one broadcast wave, includes two full TSs. One full TS is one stream obtained by combining a broadcast wave transmitted from one broadcasting station for standard broadcasting and a plurality of broadcast waves transmitted from a plurality of broadcasting stations for data broadcasting or audio broadcasting.

In other words, one full TS may be imaged as a multiplexed stream obtained from streams having different PMTs transmitted by, e.g., BS Nippon, BS Fuji, and independent data broadcasting.

The above-described full TS stream 1002 may be recorded as a second transport stream designated by reference numeral 304, 407, 508, 608, or 709 in Fig. 3, 4, 5, 6, or 7.

A stream, whose time information is written in management data, may be recorded as a first transport stream designated by reference numeral 406, 507, 607, or 708 in Fig. 4, 5, 6, or 7.

A stream, whose time information is not written in management data, may be recorded as a second transport stream designated by reference numeral 304, 407, 508, 608, or 709 in Fig. 3, 4, 5, 6, or 7.

The time information may be PTS (Presentation Time Stamp) defined in MPEG (Moving Picture Expert Group).

The above-described PTS includes a part or all of SOB (Stream Object) start PTS, SOB last PTS, CELL start PTS, and CELL last PTS. In this instance, SOB is a recording unit that is generated when a stream is recorded once. CELL is a unit to be obtained by dividing the corresponding SOB in accordance with predetermined time or to be referred to in accordance with user specification.

As for the first and second transport streams, stream formats may have to be known. In this instance, Stream Format indicates either or both of Application format and Country code. Application format represents which of Japanese digital broadcast (ARIB) format, U.S. ATSC format, and European DVB format the corresponding stream belongs to. Country code indicates the code of a country where the corresponding data has been recorded.

Regarding the first and second transport streams, details on a video, audio, or data format may be known. For example, it may be known that a format defined in Japanese digital broadcasting is used in each of the first and second transport streams.

Regarding the private data designated by reference numerals 609 and 710 in Figs. 6 and 7, a stream format may be unknown.

As for the private data designated by reference numerals 609 and 710 in Figs. 6 and 7, details on a video, audio, or data format may be unknown.

Regarding the second transport streams designated by reference numerals 304, 407, 508, 608, and 709 in Figs. 3 to 7 and the first transport streams designated by reference numerals 406, 507, 607, and 708 in Figs. 4 to 7, each stream may be transmitted by storage broadcasting.

In this instance, the storage broadcasting is based on the assumption that when a transmission bit rate provides sufficient headroom in standard broadcasting, a broadcast stream is transmitted at a lower bit rate within the headroom, alternatively, when standard broadcast is not performed, e.g., late at night, a broadcast stream is transmitted, and broadcast signals are stored in a home server. In watching, a stored bit stream is sequentially played at a normal rate.

As for storage broadcast data recorded as a second stream, a time map related thereto may be calculated later and the stream may be redefined as a first stream with a time map. In this case, the stream may not be re-recorded. Only management data may be rewritten.

The management data, designated by reference numerals 303, 404, 505, 605, and 706 in Figs. 3 to 7, will now be described in detail.

The management data includes the following information:

The management data includes a part or all of stream-format identification information, a flag indicating whether the corresponding stream is a 1-PMT partial TS or another TS, the number of PMTs, the number of multiplexed channels in the other TS, and TS-format configuration information and also includes every channel a part or all of broadcasting-station information, a moving-picture data compression standard, an audio data compression standard, a still-picture data compression standard, an animation data compression standard, a flag indicating the presence or absence of a time map, a flag indicating the presence or absence of time information, and a flag indicating whether the corresponding stream is a standard broadcast stream or a storage broadcast stream.

In addition, information about the type of the moving-picture data compression standard, such as MPEG video, H.264 video, or Windows (registered trademark) Media video, information about the type of the audio data compression standard, such as MPEG audio, Dolby audio, or DTS audio, and information about the type of the still-picture data compression standard, such as JPEG or PNG, are included.

A more specific example will now be described below.

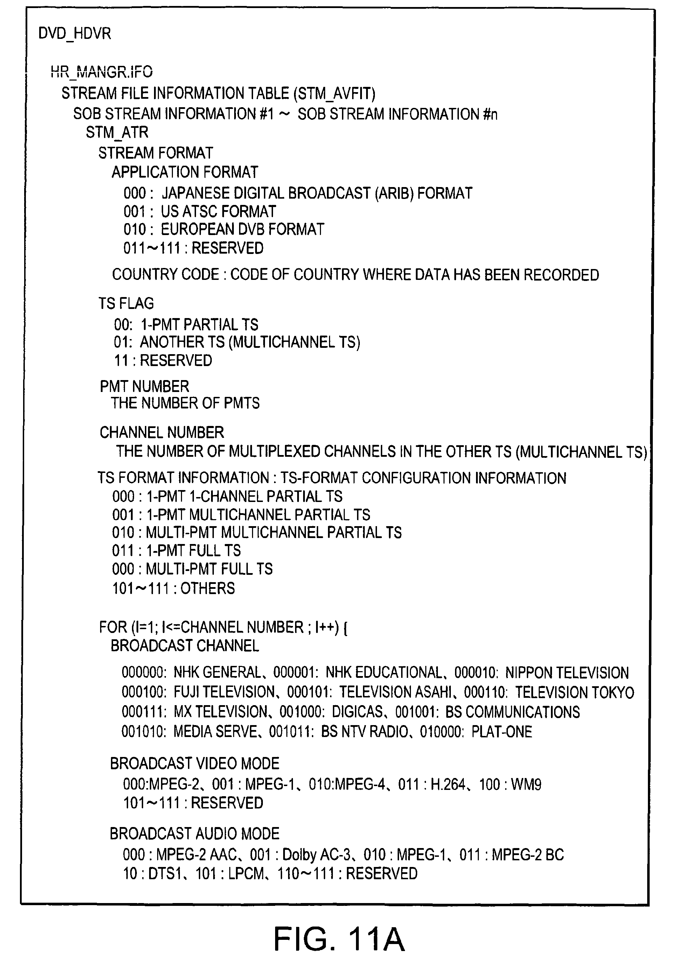

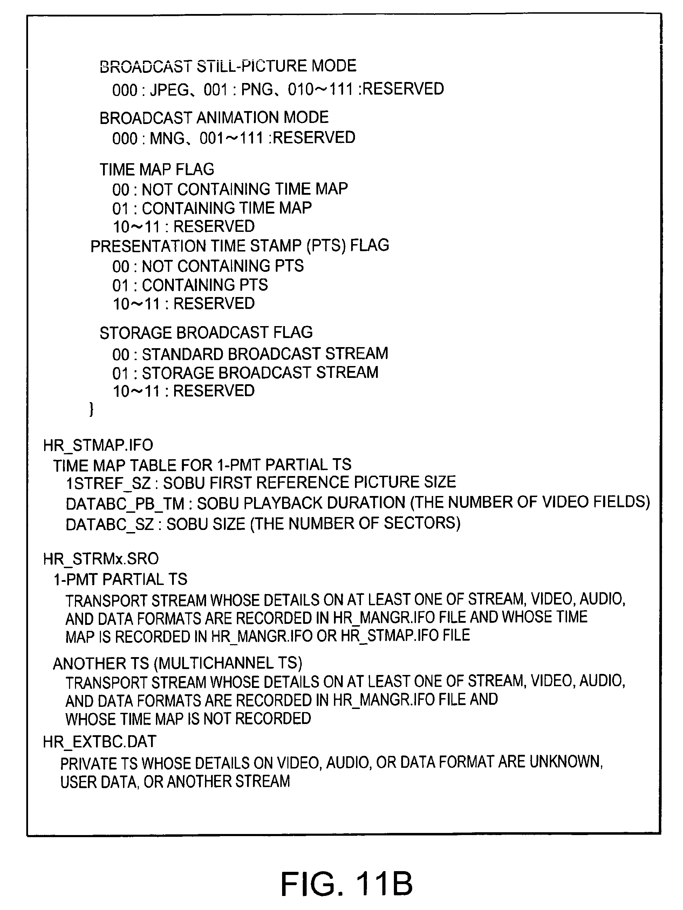

Figs. 11A and 11 B show a file configuration.

In this case, a file is named DVD_HDVR.

Referring to Figs. 11A and 11B, DVD_HDVR includes files, such as an HR_MANGR.IFO file, an HR_STMAP.IFO file, an HR_STRMx.SRO file, and an HR_EXTBC.DAT file. All of these files may not exist. Another file, e.g., a backup file named HR_MANGR.BUP, may be included.

The management data, designated by reference numerals 303, 404, 505, 605, and 706 in Figs. 3 to 7, corresponds to the HR_MANGR.IFO file.

HR_MANGR.IFO includes Stream File Information Table (STM_AVFIT) and other data.

Stream File Information Table (STM_AVFIT) includes SOB Stream Information #1 to SOB Stream Information #n and other data.

One piece of SOB Stream Information is generated each time one recording operation is performed.

SOB Stream Information includes STM_ATR (Stream Attribute) and other data.

STM_ATR includes the following flag and data:
· Stream format
   * Application format
      000: Japanese digital broadcast (ARIB) format,
      001: US ATSC format,
      010: European DVB format, and
      others: reserved
   * Country code (the code of a country where data has been recorded)
· TS flag (indicating whether the corresponding SOB (Stream Object) contains a 1-PMT partial TS or another data)
   00: 1-PMT partial TS,
   01: another TS (e.g., multichannel TS), and
   11: reserved
· PMT number (PMT number or the number of PMTs describing the number of PMTs included in the corresponding SOB)
· Channel number (the number of channels)
   where, when a 1-PMT partial TS is recorded, this data indicating 1 because the number of channels is one,
   when another TS (e.g., a multichannel TS) is recorded, this data indicating the number of channels
· TS Format information (TS-format configuration information)
   000: 1-PMT one-channel partial TS,
   001: 1-PMT multichannel partial TS,
   010: multi-PMT multichannel partial TS,
   011: 1-PMT full TS,
   100: multi-PMT full TS, and
   others: reserved

The following information items of respective channels are described.
· Broadcast channel (broadcasting station's name)
   000000: NHK General, 000001: NHK Educational, 000010: Nippon Television (NTV),
   000011: TBS, 000100: Fuji Television, 000101: Television Asahi,
   000110: Television Tokyo, 000111: MX Television,
   001000: Digicas, 001001: BS Communications,
   001010: Media Serve, 001011: BS NTV Radio,
   010000: Plat-One, 010001: SkyPerfecTV!, and
   others: reserved
· Broadcast video mode (broadcast video data compression standard)
   000: MPEG-2, 0001: MPEG-1, 010: MPEG-4, 011: H.264
   100: WM9, and 101 to 111: reserved
· Broadcast audio mode (broadcast audio data compression standard)
   000: MPEG-2 AAC, 001: Dolby AC-3, 010: MPEG-1,
   011: MPEG-2B, 100: DTS, 101: LPCM, and 110 to 111: reserved
· Broadcast still-picture mode (broadcast still-picture data compression standard)
   000: JPEG, 011: PNG, and 010 to 111: reserved
· Broadcast animation mode (broadcast animation data compression standard)
   000: MNG, and 001 to 111: reserved
· Time map flag (indicating the presence or absence of time map)
   00: not containing time map, 01: containing time map, and
   10 to 11: reserved
· PTS flag (indicating the presence or absence of PTS)
   00: not containing PTS, 01: containing PTS, and 10 to 11: reserved
· Storage broadcast flag (indicating whether the corresponding SOB is a storage broadcast stream)
   00: standard broadcast stream,
   01: storage broadcast stream, and
   10 to 11: reserved
   HR_STMAP.IFO, shown in Fig. 11 B, is a time map table for 1-PMT partial TS and includes the following items:
· 1STREF_SZ: SOBU first reference picture size,
· DATABC_PB_TM: SOBU playback duration (the number of video fields), and
· DATABC_SZ: SOBU size (the number of sectors).
   HR_STRMx.SRO is a stream data file including a 1-PMT partial TS and another TS (e.g., a multichannel TS) and includes any one of the following streams:
· 1-PMT partial TS serving as a first transport stream: a transport stream whose details on at least one of stream, video, audio, and data formats are recorded in the HR_MANGR.IFO file and whose time map is recorded in the HR_MANGR.IFO or HR_STMAP.IFO file, and
· another TS (e.g., a multichannel TS) serving as a second transport stream: a transport stream whose details on at least one of stream, video, audio, and data formats are recorded in the HR_MANGR.IFO file and whose time map is not recorded.

HR_EXTBC.DAT includes a Private TS whose details on a stream, video, audio, or data format are unknown, user data, or another stream.

Multichannel recording is performed on the basis of management data as follows:

A user enters channel numbers for multichannel recording. In this instance, the user specifies "recording of NHK (channel 1) and NTV (channel 4)" using, e.g., a remote control.

Such a control signal is supplied as the control input 102 in Fig. 1. The recording-file determination and management-data generation block 109 specifies a recording file and generates management data.

HR_STRMx.SRO is specified as the recording file and data is recorded as a second transport stream, serving as a time-map-free stream. Since the second transport is recorded, a mode for TS excluding a 1-PMT partial TS and a mode for PTS-free stream, which does not contain a PTS, is selected.

As for management data, HR_MANGR.IFO is specified. In STM_ATR in SOB Stream Information therein, data is specified as follows:
· Stream format
   * Application format: 000 Japanese digital broadcast (ARIB) format
   * Country code: code representing Japan
· TS flag: 01 another TS (multichannel TS)
· PMT number: 2 PMT number, the number of PMTs
· Channel number: 2 the number of channels
· TS Format information: 010 multi-PMT multichannel partial TS

### (First Channel)

· Broadcast channel: 000000 NHK General
· Broadcast video mode: 000 MPEG-2
· Broadcast audio mode: 000 MPEG-2 AAC
· Broadcast still-picture mode: 000 MNG
· Time map flag: 00 not containing time map
· PTS flag: 00 not containing PTS
· Storage broadcast flag: 00 standard broadcast stream

### (Second Channel)

· Broadcast channel: 000010 Nippon Television (NTV)
· Broadcast video mode: 000 MPEG-2
· Broadcast audio mode: 000 MPEG-2 AAC
· Broadcast still-picture mode: 000 JPEG
· Broadcast animation mode: 000 MNG
· Time map flag: 00 not containing time map
· PTS flag: 00 not containing PTS
· Storage broadcast flag: 00 standard broadcast stream

In the management data (HR_MANGR.IFO file), details on multichannel recording data can be described by at least Stream format and TS flag.

As described above, first and second transport streams are defined and are set as follows:
· The first transport stream contains a time map and the second transport stream does not contain a time map.
· The first transport stream is a 1-PMT partial TS and the second transport stream is another TS.
· The first transport stream has PTS in the management data and the second transport stream does not have PTS in the management data.

The management data (HR_MANGR.IFO file) describes the details on those streams. Therefore, multichannel recording and playback can be easily realized using the second transport stream.

Even if multichannel recording with no time map is initially performed, a time map may be calculated later. Accordingly, multichannel recording with a time map can be easily realized.

Regarding the above-described management data, data structure, the order of arranging data items, flag names, the number of bits, bit allocation may be different from those described as examples.

The above-described management data may not include all of the data items. The management data may include a part of the data items.

As for the above-described management data, a generation unit may be larger or smaller.

In addition, when management data is recorded on a recording medium, the start and end addresses and the length of each unit of management data may be appropriately recorded.

The same applies to program streams, PESs, and ESs in addition to transport streams.

The present invention includes a data recording apparatus for recording data using the above-described recording method and a data playback apparatus for playing data recorded by the above-described recording method.

In addition, the present invention includes a recording medium in which data is recorded by the above-described recording method.

The above embodiments have been described with respect to time-map-free streams, each of which does not contain a time map specified in the DVD-Forum. Time-map-free streams can be classified into table-containing streams, each of which contains a table showing the relationship between arrival time and recording address of the broadcast stream, and table-free streams, each of which does not contain such a table. In this specification, "table-containing stream" and "table-free stream" will be collectively called "unrestricted stream", which does not necessarily contain a time map. A method for recording a table-containing stream and a table-free stream together with a time-map-containing stream will now be described below.

Although not shown in the following embodiment, unrestricted streams may include a time-map-containing stream.

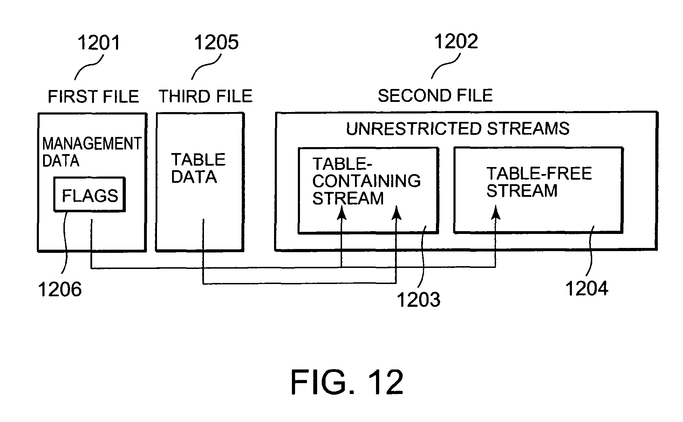

In the embodiment shown in Fig. 12, management data is recorded in a first file 1201 provided as a management file. An unrestricted stream is recorded in a second file 1202. In this example shown in the figure, the second file 1202 includes files 1203 and 1204. In the file 1203, a table-containing stream, which has a table showing the relationship between arrival time and recording address, is recorded. The other file 1204 does not include such a table.

Table data related to the stream recorded in the file 1203 is stored in a third file 1205. In the first file 1201, flags 1206 are recorded as management data. Each flag 1206 in the figure indicates whether the corresponding stream contains a time map, whether the corresponding stream contains a table showing the relationship between arrival time and recording address of the broadcast stream, or whether the corresponding stream does not have either of the time map and the table.

A player reads the flags 1206 and knows that the second file 1202 includes the unrestricted streams, the file 1203 includes the table-containing stream which contains a table showing the relationship between arrival time and recording address, and the file 1204 includes the table-free stream which does not contain a table showing the relationship between time and recording address. In addition, the player knows from the flags 1206 that the third file 1205 includes the table showing the relationship between arrival time and recording address of the stream recorded in the file 1203.

As for the stream recorded in the file 1203 shown in the figure, simple time search is performed. On the other hand, time search is not performed on the stream recorded in the file 1204.

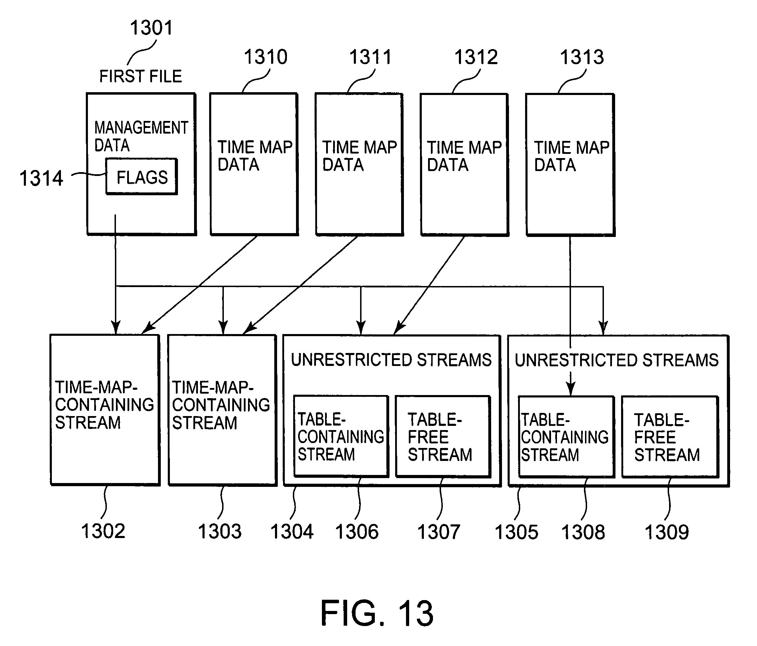

Fig. 13 shows another embodiment. In the present embodiment, management data is recorded in a first file 1301, time-map-containing streams, each of which certainly contains a time map, are recorded in second and subsequent files, and unrestricted streams are recorded in other files. More specifically, in the example shown in the figure, a management file (first file) 1301, files 1302 and 1303 including the time-map-containing streams, respectively, and files 1304 and 1305 including the unrestricted streams, respectively, are arranged. In addition, the file 1304 includes files 1306 and 1307. The file 1306 includes a table-containing stream which contains a table showing the relationship between arrival time and recording address. The file 1307 includes a table-free stream which does not contain a table showing the relationship between time and recording address. The file 1305 includes files 1308 and 1309. The file 1308 includes a table-containing stream which contains a table showing the relationship between arrival time and recording address. The file 1309 includes a table-free stream which does not contain a table showing the relationship between time and recording address.

In this example shown in the figure, files 1310 and 1311 are arranged. The file 1310 includes data about the time map of the stream recorded in the file 1302 and the file 1311 includes data about the time map of the stream recorded in the file 1303. In addition, files 1312 and 1313 are arranged. The file 1312 includes data about the table of the stream recorded in the file 1306. The file 1313 includes data about the table of the stream recorded in the file 1308.

Each of flags 1314 recorded in the first file indicates whether the corresponding stream contains a time map, whether the corresponding stream contains a table showing the relationship between arrival time and recording address of the broadcast stream, or whether the corresponding stream does not contain either of the time map and the table.

A player reads the flags 1304 and distinguishes the streams recorded in the files 1302 to 1309. In addition, the player distinguishes the time maps and tables recorded in the files 1310 to 1313.

Time search is correctly performed on the streams recorded in the files 1302 and 1303 using the time maps recorded in the files 1310 and 1311. Simple time search is performed on the streams recorded in the files 1306 and 1308 using the table data in the files 1312 and 1313. Time search is not performed on the streams recorded in the files 1307 and 1309.

As described above, an unrestricted stream may include any one of a time-map-containing stream, a table-containing stream which contains a table showing the relationship between arrival time and recording address of the broadcast stream, and a table-free stream which does not contain a table showing the relationship between time and recording address. Alternatively, an unrestricted stream may be either a table-containing stream which contains a table showing the relationship between arrival time and storage address of the broadcast stream or a table-free stream which does not contain a table showing the relationship between presentation time and recording address. Flags are defined in accordance with the definitions of the above-described streams.

An example of flags defined in accordance with streams will now be described. In this case, whether each stream is a time-map-containing stream, a table-containing stream, or a time-map-free table-free stream, which does not contain either of the time map and the table, is identified using the corresponding flag. This case will now be described.

HR_MANGR_IFO, a management file, includes Stream File Information Table (STM AVFIT) and other data.

Stream File Information Table (STM AVFIT) includes SOB Stream Information #1 to SOB Stream Information #n and other data. Each piece of SOB Stream Information is generated each time one recording operation is performed. SOB Stream Information includes STM ATR (Stream Attribute) and other data.

STM ATR includes the following flags:
· Recording mode
   0: time-map-containing stream
   1: unrestricted stream
· Map content for stream
   00: time-map-containing stream in which Recording mode=0 or Recording mode=1
   01: table-containing stream in which Recording mode=1
   10: time-map-free table-free stream in which Recording mode=1
   11: reserved

The time map includes the following data:
1. 1STREF_SZ: a first reference picture in a VOBU (Video Object) or an ESOBU when a GOP (Group of Pictures) whose number is an integer of one or more is set to a VOBU or ESOBU, i.e., data indicating the number of packet groups or the number of sectors as the size of I-picture;
2. VOBU_PB_TM(SOBU_PB_TM): data indicating the number of video fields as the duration during which the VOBU (ESOBU) is played; and
3. VOBU_SZ(SOBU_SZ): data indicating the number of packet groups or the number of sectors as the size of the VOBU (ESOBU) recorded.

The table showing the relationship between arrival time and recording address of a broadcast stream includes the following data:
1. AT_SOBU_SZ: data indicating the size of ESOBU as the number of packet groups or the number of sectors when, e.g., ESOBU is regarded as a data block arriving every 10 seconds.

The above-described arrangement of files related to the streams, the time map, and the table are not limited to those examples. The data structure of management data, the order of arranged data items, the names of flags, the number of bits, bit allocation are not limited to the above-described examples. Moreover, a unit of management data to be generated may be larger or smaller. In addition, when management data is recorded on a recording medium, the start and end addresses and the length of each unit of management data may be appropriately recorded.

Regarding the time map and the table, unrepresented data in the above-described examples may be recorded.

The same applies to program streams, PESs, and ESs in addition to transport streams.

The present invention is not limited to the above-described method for recording data. The present invention includes a data recording apparatus for recording data using the method, a data playback apparatus for playing data recorded by the method, and a recording medium in which data is recorded by the method.

According to the present invention, a stream whose relationship between time and recording position is recorded and a stream whose relationship therebetween is not recorded are recorded in different areas such that the streams are distinguished from each other, so that a plurality of streams or channels can simultaneously be recorded. According to the present invention, simultaneous recording can be realized without frequent seeking. Advantageously, recording errors can also be reduced. Moreover, according to the present invention, time management can be performed in accordance with the number of streams to be multiplexed. In other words, according to the present invention, when the number of streams to be multiplexed is small, accurate time map data is recorded, thus realizing reliable playback. When the number of streams to be multiplexed is large, simple time information is calculated or recorded, alternatively, time information is recorded without being calculated. Advantageously, the load required for the calculation can be reduced.

### Industrial Applicability

The present invention can be applied to a data recording and playback apparatus, supporting various recording media, such as a DVD and a built-in HDD, for recording digital data on a recording medium and playing the data.

## Claims

1. A method for recording data, comprising:
recording management data in a first file; and
recording a time-map-free stream, which does not contain a time map showing the relationship between time and recording position, in a second file.

2. A method for recording data, comprising:
recording management data in a first file;
recording n (n ≥ 2) kinds of streams in a second file, the streams being distinguished from each other by a predetermined process; and
arranging flags in the first file, the flags being used for distinction of the n kinds of streams recorded in the second file.

3. A method for recording data, comprising:
recording management data in a first file;
recording n kinds of streams in other files such that first, second, third, ..., and nth streams are recorded in second, third, ..., and (n+1)th files, respectively, the streams being distinguished from each other by a predetermined process; and
arranging flags in the first file, the flags being used for distinction of the n kinds of streams.

4. A method for recording data, comprising:
recording management data in a first file;
recording n kinds of streams in second to (m+1)th (m≥2) files, respectively, the streams being distinguished from each other by a predetermined process; and
arranging flags in the first file, the flags being used for distinction of the n kinds of streams.

5. The method according to Claim 2, wherein
time-map-containing streams are set to first to kth (k≥1, k≥n-1) streams,
time-map-free streams are set to (k+1)th to nth streams, and
time maps related to the first to kth streams are recorded in the first file or a third file.

6. The method according to Claim 5, wherein when n=2 and k=1, a time-map-containing stream is set to a first stream and a time-map-free stream is set to a second stream.

7. The method according to Claim 3, wherein
time-map-containing streams are set to first to kth streams,
time-map-free streams are set to (k+1)th to nth streams, and
time maps related to the first to kth streams are recorded in the first file or an (n+2)th file.

8. The method according to Claim 4, wherein
time-map-containing streams are set to first to kth streams,
time-map-free streams are set to (k+1)th to nth streams, and
time maps related to the first to kth streams are recorded in the first file or an (m+2)th file.

9. The method according to Claim 2, wherein a 1-PMT partial TS (Transport Stream) having one PMT (Program Map Table) is set to a first stream and another stream is set to a second stream.

10. The method according to Claim 2, wherein a first stream is at least a 1-PMT partial TS and a time-map-free 1-PMT partial TS is set to a second stream.

11. The method according to Claim 9, wherein one multi-PMT stream including a plurality of 1-PMT streams is set to a second stream.

12. The method according to Claim 10, wherein one multi-PMT stream including a plurality of 1-PMT streams is set to a second stream.

13. The method according to Claim 9, wherein
a plurality of streams or a plurality of 1-PMT streams are combined into one 1-PMT stream, and
the stream is set to the first stream.

14. The method according to Claim 10, wherein
a plurality of streams or a plurality of 1-PMT streams are combined into one 1-PMT stream, and
the stream is set to the first stream.

15. The method according to Claim 13 or 14, wherein the plurality of streams or the plurality of 1-PMT streams in Claim 13 or 14 are partial TSs of different channels.

16. The method according to Claim 13 or 14, wherein the plurality of streams or the plurality of 1-PMT streams in Claim 13 or 14 are full TSs.

17. The method according to Claim 2, wherein a stream whose time information is described in the management data is set to a first stream and a stream whose time information is not described in the management data is set to a second stream.

18. The method according to Claim 17, wherein the time information is PTS (Presentation Time Stamp).

19. The method according to Claim 2, wherein the stream formats of first and second streams are known.

20. The method according to Claim 2, wherein details on a video, audio, or data format of each of the first and second streams are known.

21. The method according to Claim 2, wherein a stream whose stream format is unknown is recorded in another file.

22. The method according to Claim 2, wherein a stream whose details on a video, audio, or data format are unknown is recorded in another file.

23. The method according to Claim 2, wherein a stream transmitted by storage broadcasting is set to a second stream.

24. A method for recording data, wherein management data includes a part or all of stream-format identification information, a flag indicating whether the corresponding stream is a 1-PMT partial TS or another TS, the number of PMTs, the number of multiplexed channels in the other TS, and TS-format configuration information, and also includes every channel a part or all of broadcasting-station information, a moving-picture data compression standard, an audio data compression standard, a still-picture data compression standard, an animation data compression standard, a flag indicating the presence or absence of a time map, a flag indicating the presence or absence of time information, and a flag indicating whether the corresponding stream is a standard broadcast stream or a storage broadcast stream.

25. The method according to Claim 24, wherein
MPEG video, H.264 video, or Windows (registered trademark) Media video is shown as the moving-picture data compression standard,
MPEG audio, Dolby audio, or DTS audio is shown as the audio data compression standard, and
JPEG or PNG is shown as the still picture data compression standard.

26. A data recording apparatus for recording data by the method according to any one of Claims 1 to 4 and/or a data playback apparatus for playing data recorded by the method according to any one of Claims 1 to 4.

27. A recording medium in which data is recorded by the method according to any one of Claims 1 to 4.

28. A method for recording data such that a plurality of streams or channels are simultaneously recorded, the method comprising:
recording each stream in a file as a first stream whose relationship between time and recording position is recorded or a second stream whose relationship therebetween is not recorded; and
recording management data for distinction of the first and second streams in another file.

29. A method for recording data, comprising:
recording management data in a first file; and
recording one or more unrestricted streams, each of which does not necessarily contain a time map, in second and subsequent files, respectively.

30. A method for recording data, comprising:
recording management data in a first file;
setting one or more time-map-containing streams to first to kth (k≥1, k≥n-1) streams and recording the streams in second and subsequent files, respectively, each stream certainly containing a time map; and
setting one or more unrestricted streams to (k+1)th to nth streams and recording the streams in another or other files, respectively.

31. The method according to Claim 29, wherein
each unrestricted stream is regarded as any one type of a time-map-containing stream, a table-containing stream which contains a table showing the relationship between arrival time and recording address of the broadcast stream, and a table-free stream which does not contain a table showing the relationship between time and recording address, and
a flag indicating the type is recorded separately.

32. The method according to Claim 29, wherein
each unrestricted stream is divided into predetermined stream segments and each segment is regarded as any one type of a time-map-containing stream segment, a table-containing stream segment which contains a table showing the relationship between arrival time and recording address of the broadcast stream segment, and a time-map-free table-free stream segment which does not contain either of the time map and the table, and
a flag indicating the type is recorded separately.

33. The method according to Claim 31, wherein each flag is recorded in the first file.

34. The method according to Claim 29, wherein
each unrestricted stream is regarded as any one type of a table-containing stream, which contains a table showing the relationship between arrival time and recording address of the broadcast stream, and a table-free stream, which does not contain a table showing the relationship between time and recording address, and
a flag indicating the type is recorded separately.

35. The method according to Claim 29, wherein
each unrestricted stream is divided into predetermined stream segments and each segment is regarded as any one type of a table-containing stream segment, which contains a table showing the relationship between arrival time and recording address of the broadcast stream segment, and a time-map-free table-free stream segment, which does not contain either of the time map and the table, and
a flag indicating the type is recorded separately.

36. The method according to Claim 34 or 35, wherein each flag is recorded in the first file.

37. The method according to Claim 29, wherein a time map or a table related to each unrestricted stream is recorded in the first tile or another file, which is not disclosed in Claim 29.

38. The method according to Claim 30, wherein a time map related to each time-map containing stream and a table related to each unrestricted stream are recorded in the first file or another file, which is not disclosed in Claim 30.

39. A data recording apparatus for recording data by the method according to Claim 29 and/or a data playback apparatus for playing data recorded by the method according to Claim 29.

40. A recording medium in which data is recorded by the method according to Claim 29.
